# EUROPÄISCHE PATENTSCHRIFT

(11) **EP 1 121 282 B1**
(45) Veröffentlichungstag und Bekanntmachung des Hinweises auf die Patenterteilung: **11.06.2003**
(21) Anmeldenummer: 99948898.4
(22) Anmeldetag: 29.09.1999
(51) Int. Cl.: B60T 10/02, B60T 1/087

(54) **VERFAHREN ZUR RETARDER-ANSTEUERUNG UND STEUERGERÄT HIERFÜR**
METHOD FOR RETARDER CONTROL AND CONTROL APPARATUS THEREFOR
PROCEDE POUR LA COMMANDE D'UN RALENTISSEUR ET DISPOSITIF DE CONTROLE CORRESPONDANT

(30) Priorität: 22.10.1998 DE 19848546
(43) Veröffentlichungstag der Anmeldung: 08.08.2001
(73) Patentinhaber: Voith Turbo GmbH & Co. KG, 89522 Heidenheim (DE)
(72) Erfinder: BETZ, Jürgen, D-74589 Satteldorf (DE); SCHERER, Roland, D-74564 Crailsheim (DE); VOGELSANG, Klaus, D-74564 Crailsheim (DE)
(74) Vertreter: Dr. Weitzel & Partner
(86) Internationale Anmeldenummer: EP9907220
(87) Internationale Veröffentlichungsnummer: WO00024621

(56) Entgegenhaltungen:
- EP-A- 0 873 925
- DE-U- 29 707 304

## Beschreibung

Die Erfindung betrifft ein Verfahren zur Befüllung eines Retarders mit Betriebsmedium mittels von Ventileinrichtungen, die an einen Vorratsbehälter mit einem Vorratsluftdruck P_{V} angeschlossen sind und Betriebsmedium mit einem Steuerdruck P_{Y} in den Retarder fördern, wobei nach Einschalten des Retarders für einen ersten Zeitabstand T₁ ein über dem Nenndruck P_{Y}NENN für das einzustellende Nennbremsmoment liegender Überschwingsteuerdruck P_{Y}(Ü) eingestellt wird und in einem zweiten Zeitabschnitt T₂ der Überschwingsteuerdruck P_{Y}(Ü) auf den Nenndruck P_{Y}NENN reduziert wird.

Neben dem Verfahren gibt die Erfindung auch eine Steuereinrichtung zur Durchführung des Verfahrens nach Anspruch 10 an.

Im allgemeinen wird das Bremsmoment eines hydrodynamischen Retarders auf Anforderung durch beispielsweise den Fahrer eines Fahrzeuges dadurch aufgebaut, daß der Arbeitsraum mit Arbeitsmedium bzw. Betriebsmedium, vorzugsweise Öl oder Wasser, befüllt wird.

Um die Einschaltzeit eines derartigen hydrodynamischen Retarders zu minimieren, ist es erforderlich, den Arbeitsraum zwischen Rotor und Stator schnell mit dem Betriebsmedium zu befüllen, das bedeutet, das Betriebsmedium mit hoher Geschwindigkeit aus einem Vorratsraum in den Arbeitsraum zu transportieren. Üblicherweise geschieht dies mit Hilfe einer Druckluftventileinrichtung, deren Ausgangsdruck P_{Y}, der dem Steuerdruck des Retarders entspricht, das Betriebsmedium in den Arbeitsraum fördert.

Um ein schnelles Einschalten zu gewährleisten, ist es bekannt, den Soll-Steuerdruck bzw. Nenn-Steuerdruck, der durch das gewünschte Nenn-Bremsmoment vorgegeben wird, zu übersteuern. Dies bedeutet, daß für einen kurzen Zeitraum ein höherer Druck als der Nenndruck auf das Betriebsmedium gegeben wird.

Es hat sich nun gezeigt, daß unter bestimmten Betriebsbedingungen eine derartige Ansteuerung dazu führt, daß die Bremswirkung nur verzögert eintritt bzw. im Extremfall das Antiblockiersystem des Fahrzeuges ausgelöst. wird.

Eine Steuereinrichtung, wie oben beschrieben, für einen Retarder ist beispielsweise aus der DE-A-41 13 539 bekanntgeworden.

Die Steuervorrichtung für einen Retarder gemäß der DE-A-41 13 539 umfaßt einen Sammeltank, der in Fluidverbindung mit dem Retarder steht, und ein Druckeinstellbauteil, das in atmosphärischer Verbindung mit dem Sammeltank stehen kann, um der in den Sammeltank fließenden Druckluft eine vorbestimmte Beschränkung aufzuerlegen, in Übereinstimmung mit der jeweiligen feststehenden Druckhöhe, die in dem Retarder erzeugt wird.

Aufgabe der Erfindung ist es, die oben geschilderten Nachteile des Standes der Technik zu überwinden.

Diese Aufgabe wird dadurch gelöst, daß der Überschwingsteuerdruck P_{Y}(Ü) sowie die Zeitdauer, die sich in die Zeitabschnitte T₁ und T₂ gliedert in Abhängigkeit von wenigstens einer der nachfolgenden Größen:
- Retarder-Öltemperatur
- Retarder-Drehzahl bzw. Fahrzeuggeschwindigkeit
- Fahrzeugquerbeschleunigung
- ABS-Signal
- Achslast
- Brems-Pausen-Intervall
- Bremsmittelstand
- Außentemperatur
- Geschwindigkeit des Betätigungselementes
- Beschleunigung der Sollwertvorgabe (Geschwindigkeitsänderung ohne Dynamik des Sollwertes)
festgesetzt bzw. eingestellt wird.

Es hat sich herausgestellt, daß es besonders bevorzugt ist, wenn mit steigender Retarder-Öltemperatur die Höhe P_{Y}(Ü) und Zeitdauer T₁ und T₂ des Überschwingsteuerdruckes abnehmen.

In einer weitergebildeten Ausführungsform der Erfindung wird die Retarder-Drehzahl berücksichtigt, indem bei steigender Retarder-Drehzahl bzw. Fahrzeuggeschwindigkeit die Höhe P_{Y}(Ü) und Zeitdauer T₁ und T₂ des Überschwingdruckes abnehmen.

Auch die vorausgegangenen Bremsanforderungen, beispielsweise die Zeitdauer der Brems-/Pausen-Intervalle oder der Retarder-Bremsstufe sowie der Retarder-Bremsstufen-Betätigungsgeschwindigkeit können den Aufbau des Retarder-Bremsmomentes beeinflussen. Eine weitere Größe, die das Einschaltverhalten des Retarders beeinflusst, ist der Betriebsmittelstand, d.h. der Füllstand an Arbeitsflüssigkeit bspw. der des Öls im Vorratsbehälter. Abhängig vom Betriebsmittelstand, der über Sensoren ermittelt werden kann, wird die Zeitdauer des Übersteuems und die Höhe vorgegeben, wobei die Höhe P_{Y}(Ü) sowie die Zeitdauer T₁ und T₂ mit abnehmendem Betriebsmittelstand zunehmen. Es ist daher vorteilhaft, wenn auch diese Größen für den Aufbau des Überschwingimpulses berücksichtigt werden.

In dem zuvor beschriebenen Verfahren stellt die Erfindung auch eine Retarder-Steuereinheit zur Durchführung des Verfahrens zur Verfügung; wobei diese eine Rechnereinheit, eine Steuerdruck-Einstellvorrichtung sowie Sensoreinrichtungen zur Erfassung wenigstens einer der nachfolgenden Größen
- der Retarder-Öltemperatur,
- der Retarder-Drehzahl,
- der Fahrzeugquerbeschleunigung,
- des ABS-Signales sowie
- der Achslast
- Bremse-Pausen-Intervall
- Bremsmittelstandes
- der Außentemperatur
- der Geschwindigkeit des Betätigungselementes
- der Beschleunigung der Sollwertvorgabe (Geschwindigkeitsänderung ohne Dynamik des Sollwertes)
umfassen und die Retarder-Steuereinheit dadurch gekennzeichnet ist, daß die Rechner-Einheit in Abhängigkeit von den erfaßten Signalen die Steuerdruck-Einstellvorrichtung derart ansteuert, daß ein Überschwingsteuerdruck vorbestimmter Höhe bzw. Größe und Zeitdauer eingestellt wird.

Die Erfindung soll anhand der Figuren nachfolgend beispielhaft beschrieben werden:

Es zeigen:

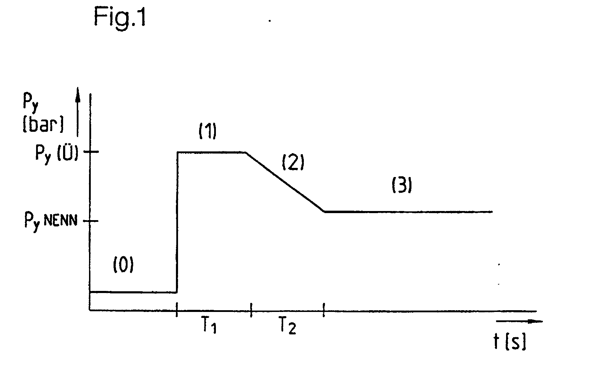

- Fig. 1:: Beispielhaft den prinzipiellen Verlauf des Steuerdruckes P_{Y} als Funktion der Zeit

In Fig. 1 ist der zeitliche Verlauf des Steuerdruckes P_{Y} als Funktion F(t) dargestellt. Der Steuerdruck wird beim Einschalten sprunghaft vom Wert 0 auf den Wert P_{Y}(Ü) erhöht. Der Überschwingsteuerdruck P_{Y}(Ü) liegt für die Zeitdauer T₁ an. In der nachfolgenden Zeit T₂ wird der Überschwingsteuerdruck P_{Y}(Ü) auf den Nenndruck P_{Y}NENN reduziert. Der Nenndruck P_{Y}NENN ist der Druck, bei dem der Retarder sein Nennmoment erreicht. Im vorliegenden Fall erfolgt die Absenkung vom Überschwingsteuerdruck P_{Y}(Ü) auf den Nenndruck P_{Y}NENN linear. Dies ist aber keineswegs zwingend. Selbstverständlich können hier vom Fachmann andere Arten der kontinuierlichen Absenkung gewählt werden.

Das Einschaltverhalten des Retarders wird nun maßgeblich durch die Höhe der Übersteuerung des Nenndruckes, die maximal bis zum Vorratsdruck des Vorratluftbehälters reichen kann, sowie die Zeitdauer der Übersteuerung und die Zeitdauer der Zurückregelung von der Übersteuerung auf den Nenndruck bestimmt Um das Einschaltverhalten zu optimieren, werden diese Größen in Abhängigkeit von Fahrzeugzustandsignalen, wie beispielsweise dem Vorratsdruck, der Temperatur des Betriebsmediums oder aber auch der Retarder-Drehzahl vorgegeben. Besonders bevorzugt werden die Parameter zur Bestimmung des zeitlichen Verlaufes des Steuerdruckes mit Hilfe einer Rechnereinheit bzw. eines elektronischen Steuergerätes ermittelt, und zwar in Abhängigkeit von beispielsweise den mit Hilfe von Sensoren ermittelten physikalischen Größen wie oben angegeben.

Nur beispielhaft für die den zeitlichen Druckverlauf beeinflussenden Größen sei hier der Vorratsdruck P_{V} des Fahrzeuges genannt, der mit Hilfe eines separaten Drucksensors bestimmt werden kann. Auf diese Art und Weise ist es möglich, betriebsbedingte Druckschwankungen sowie verschiedene Fahrzeug-Vorrat-Nenndrücke auszugleichen und unabhängig hiervon stets dasselbe Retarder-Bremsverhalten zu erzielen.

Durch Einbringen eines Temperatursensors für das Betriebsmedium ist es möglich, Viskositätsschwankungen, die sich in einer Temperaturänderung niederschlagen, des Betriebsmediums zu berücksichtigen. Im allgemeinen gilt, daß das Einschaltverhalten um so schlechter wird, je höher die Viskosität des Betriebsmediums ist. Dem kann dadurch entgegengetreten werden, daß sowohl die Höhe bzw. Größe wie auch die Zeitdauer der Übersteuerung zunimmt, wenn die Retarder-Öltemperatur abnimmt.

Neben den über den Sensor erfaßten Größen können zur Berechnung des zeitlichen Druckverlaufes auch noch weitere Informationen, die dem Fahrzeugmanagement entnommen werden können, herangezogen werden. Nur beispielsweise sei hier für die aus dem Tachographensignal ableitbare Retarder-Drehzahl genannt, wobei bei hoher Geschwindigkeit und damit hoher Retarder-Drehzahl nur kleine Überschwingdruckverläufe notwendig sind, im Gegensatz zu geringen Retarder-Drehzahlen, die für ein schnelles Einschalten hohe Überschwingdruckverläufe verlangen.

In der vorliegenden Erfindung wird somit erstmals ein Verfahren und eine Vorrichtung angegeben, mit dem ein unabhängig von Fahrzeugsbetriebszuständen im wesentlichen gleiches Retarder-Einschaltverhalten erzielt wird.

## Patentansprüche

1. Verfahren zur Befüllung eines Retarders mit Brems- bzw.
Betriebsmedium mittels von Ventileinrichtungen, die an einen Vorratsbehälter mit einem Vorratsluftdruck P_{V} angeschlossen sind und
Betriebsmedium mit einem Steuerdruck P_{Y} in den Retarder fördern, umfassend die folgenden Schritte:
1.1 es wird nach Einschalten des Retarders für einen ersten Zeitabschnitt T₁ ein über dem Nenndruck P_{Y}NENN für das einzustellende Nennbremsmoment liegender Überschwingsteuerdruck P_{Y}(Ü) eingestellt.
1.2 es wird in einem zweiten Zeitabschnitt T₂ der Überschwingsteuerdruck P_{Y}(Ü) auf den Nenndruck P_{Y}NENN reduziert;
das Verfahren ist **dadurch gekennzeichnet, daß**
1.3 der Überschwingsteuerdruck P_{Y}(Ü) sowie die Zeitintervalle T₁ und T₂ in Abhängigkeit von wenigstens einer der nachfolgenden Größen
- Retarder-Öltemperatur
- Retarder-Drehzahl bzw. Fahrzeuggeschwindigkeit
- Fahrzeugquerbeschleunigung
- ABS-Signal
- Achslast
- Brems-Pausen-Intervall
- Bremsmittelstand
- Außentemperatur
- Geschwindigkeit des Betätigungselementes
- Beschleunigung der Sollwertvorgabe
festgesetzt bzw. eingestellt wird.

2. Verfahren nach Anspruch 1, **dadurch gekennzeichnet, daß** die Ventileinrichtung eine Druckluftventileinrichtung umfaßt.

3. Verfahren nach einem der Ansprüche 1 bis 2, **dadurch gekennzeichnet, daß**
mit steigender Retarder-Öltemperatur Größe P_{Y}(Ü) und Zeitdauer T₁, T₂ des Überschwingdruckes abnehmen,

4. Verfahren gemäß einem der Ansprüche 1 bis 3, **dadurch**
**gekennzeichnet, daß**
mit steigender Retarder-Drehzahl bzw. Fahrgeschwindigkeit die Größe P_{Y}(Ü) und die Zeitdauer T₁ und T₂ des Überschwingdruckes abnehmen.

5. Verfahren gemäß einem der Ansprüche 1 bis 4, **dadurch**
**gekennzeichnet, daß** die
Größe P_{Y}(Ü) und Zeitdauern T₁ und T₂ durch vorausgegangene Bremsanforderungen bestimmt werden.

6. Verfahren nach Anspruch 5, **dadurch gekennzeichnet, daß**
Größe P_{Y}(Ü) und die Zeitdauer T₁ und T₂ mit Zunahme der Brems-/Pausen-Intervalle zunehmen.

7. Verfahren nach Anspruch 5 oder 6, **dadurch gekennzeichnet, daß** mit steigender Retarder-Bremsstufe Größe P_{Y}(Ü) und Zeitdauer T₁ und T₂ des Überschwingdruckes zunehmen.

8. Verfahren nach einem der Ansprüche 1 bis 7, **dadurch**
**gekennzeichnet, daß**
mit steigender Achslast Größe P_{Y}(Ü) und Zeitdauer T₁ und T₂ des Überschwingdruckes zunehmen.

9. Verfahren nach einem der Ansprüche 1 bis 8, **dadurch**
**gekennzeichnet, daß** mit abnehmendem Betriebsmittelstand im Vorratsbehälter des Retardersdie Größe P_{Y}(Ü) und Zeitdauer T₁ und T₂ zunehmen.

10. Retarder-Steuereinheit zur Durchführung des Verfahrens gemäß
einem der Ansprüche 1 bis 8 mit
10.1 einer Rechnereinheit
10.2 einer Steuerdruck-Einstellvorrichtung
10.3 einer Sensoreinrichtung zur Erfassung wenigstens einer der nachfolgenden Größen:
- der Retarder-Öltemperatur
- der Retarder-Drehzahl
- der Fahrzeugquerbeschleunigung
- des ABS-Signales
- der Achslast
- des Brems-Pause-Intervalles
- des Bremsmittelstandes
- der Außentemperatur
- der Geschwindigkeit des Betätigungselements
- der Beschleunigung der Sollwertvorgabe
die Steuereinheit ist **dadurch gekennzeichnet, daß**
10.4 die Rechnereinheit in Abhängigkeit von den erfaßten Signalen die Steuerdruck-Einstellvorrichtung derart ansteuert, daß ein Überschwingsteuerdruck vorbestimmter Größe P_{Y}(Ü) und Zeitdauer T₁ und T₂ eingestellt wird.

## Claims

1. A method for filling a retarder with a brake or operating medium by means of valve devices which are connected to a storage reservoir with a storage air pressure Pᵥ and convey operating medium with a control pressure P_{Y} into the retarder, comprising the following steps:
1.1 an overswing control pressure P_{Y}(O) is set after the activation of the retarder for a first time segment T₁, which overswing control pressure lies above the nominal pressure P_{Y}NOM for the nominal braking torque;
1.2 the overswing control pressure P_{Y}(O) is reduced to the nominal pressure P_{Y}NOM in a second time segment T₂;
the method by **characterized in that**
1.3 the overswing control pressure P_{Y}(O) as well as the time intervals T₁ and T₂ is set or determined depending on at least one of the following variables:
- retarder oil temperature;
- retarder speed or vehicle speed;
- transverse acceleration of vehicle;
- ABS signal;
- axle load;
- brake pause interval;
- brake medium level;
- outside temperature;
- speed of actuating element;
- acceleration of set-point definition.

2. A method as claimed in claim 1, **characterized in that** the valve device comprises a compressed-air valve device.

3. A method as claimed in one of the claims 1 to 2, **characterized in that** the variable P_{Y}(O) and the time duration T₁ and T₂ of the overswing control pressure decrease with rising retarder oil pressure.

4. A method as claimed in one of the claims 1 to 3, **characterized in that** the variable P_{Y}(O) and the time duration T₁ and T₂ of the overswing control pressure decrease with rising retarder speed or driving speed.

5. A method as claimed in one of the claims 1 to 4, **characterized in that** the variable P_{Y}(O) and the time duration T₁ and T₂ are determined by preceding braking requirements.

6. A method as claimed in claim 5, **characterized in that** the variable P_{Y}(O) and the time duration T₁ and T₂ increase with the increase of the brake and pause intervals.

7. A method as claimed in claim 5 or 6, **characterized in that** the variable P_{Y}(O) and the time duration T₁ and T₂ of the overswing control pressure increase with rising retarder brake step.

8. A method as claimed in one of the claims 1 to 7, **characterized in that** the variable P_{Y}(O) and the time duration T₁ and T₂ of the overswing control pressure increase with rising axle load.

9. A method as claimed in one of the claims 1 to 8, **characterized in that** the variable P_{Y}(O) and the time duration T₁ and T₂ increase with decreasing level of operating medium in the storage reservoir.

10. A retarder control unit for performing the method as claimed in one of the claims 1 to 8, comprising
10.1 a computer unit;
10.2 an adjusting apparatus for the control pressure;
10.3 a sensor device for detecting at least one of the following variables:
- the retarder oil temperature;
- the retarder speed;
- the transversal acceleration of the vehicle;
- the ABS signal;
- the axial load;
- brake pause interval;
- the brake fluid level;
- the outside temperature;
- the speed of the actuating element;
- the acceleration of set-point definition, with the control unit being **characterized in that**
10.4 the computer unit triggers the control pressure adjusting apparatus depending on the detected signals in such a way that an overswing control pressure of a predetermined magnitude P_{Y}(O) and time duration T₁ and T₂ increase is set.

## Revendications

1. Procédé de remplissage d'un ralentisseur avec du fluide de fonctionnement ou de freinage au moyen de dispositifs de soupape qui sont raccordés à un réservoir de stockage avec une pression d'air comprimé de réserve Pᵥ et
qui distribuent du fluide de fonctionnement à une pression de commande P_{y} dans le ralentisseur, comprenant les étapes suivantes :
1.1 après enclenchement du ralentisseur, on règle pour une première période T₁, une pression de commande de dépassement P_{Y} (Ü) se situant au-dessus de la pression nominale P_{Y}NENN correspondant au couple de freinage nominal à établir.
1.2 dans une deuxième période T₂, on réduit la pression de commande de dépassement P_{Y} (Ü) à la pression nominale P_{Y}NENN ;
le procédé est **caractérisé en ce que**
1.3 la pression de commande de dépassement P_{Y} (Ü) ainsi que les intervalles de temps T₁ et T₂ sont déterminés et réglés en fonction d'au moins l'une des grandeurs suivantes :
- température de l'huile du ralentisseur
- nombre de tours du ralentisseur ou vitesse du véhicule
- accélération transversale du véhicule
- signal ABS
- charge axiale
- intervalles freinage-temps de repos
- niveau du fluide de freinage.
- température extérieure
- vitesse de l'élément d'actionnement
- accélération de la notification de valeurs de consigne.

2. Procédé selon la revendication 1, **caractérisé en ce que** le dispositif de soupape comprend un dispositif à soupape à air comprimé.

3. Procédé selon l'une des revendications 1 et 2, **caractérisé en ce que** lorsque la température de l'huile du ralentisseur augmente, la grandeur P_{Y}(Ü) et les durées T₁, T₂ de la pression de dépassement diminuent.

4. Procédé selon l'une des revendications 1 à 3, **caractérisé en ce que** lorsque le nombre de tours du ralentisseur et/ou la vitesse de marche augmentent, la grandeur P_{Y}(Ü) et les durées T₁ et T₂ de la pression de dépassement diminuent.

5. Procédé selon l'une des revendications 1 à 4, **caractérisé en ce que** la grandeur P_{Y}(Ü) et les durées T₁ et T₂ sont déterminées par des demandes précédentes de freinage.

6. Procédé selon la revendication 5, **caractérisé en ce que** la grandeur P_{Y}(Ü) et les durées T₁ et T₂ augmentent avec l'accroissement des intervalles freinage/temps de repos.

7. Procédé selon la revendication 5 ou 6, **caractérisé en ce que** lorsque le cran de freinage du ralentisseur augmente, la grandeur P_{Y}(Ü) et les durées T₁ et T₂ de la pression de dépassement augmentent.

8. Procédé selon l'une des revendications 1 à 7, **caractérisé en ce que** lorsque la charge axiale augmente, la grandeur P_{Y}(Ü) et les durées T₁ et T₂ de la pression de dépassement augmentent.

9. Procédé selon l'une des revendications 1 à 8, **caractérisé en ce que** lorsque le niveau du fluide de fonctionnement diminue dans le réservoir de stockage du ralentisseur, la grandeur P_{Y}(Ü) et les durées T₁ et T₂ de la pression de dépassement augmentent.

10. Unité de commande de ralentisseur destinée à mettre en oeuvre le procédé selon l'une des revendications 1 à 8 avec
10.1 une unité de calcul
10.2 un dispositif de réglage de la pression de commande
10.3 un dispositif capteur pour la saisie d'au moins l'une des grandeurs suivantes :
- la température de l'huile du ralentisseur
- le nombre de tours du ralentisseur
- l'accélération transversale du véhicule
- le signal ABS
- la charge axiale
- l'intervalle freinage/temps de repos
- le niveau du fluide de freinage
- la température extérieure
- la vitesse de l'élément d'actionnement
- l'accélération de la notification de valeurs de consigne.
l'unité de commande est **caractérisée en ce que**
10.4 l'unité de calcul, en fonction des signaux saisis, met en oeuvre la commande du dispositif de réglage de la pression de commande, de sorte qu'une pression de commande de dépassement d'une grandeur P_{Y}(Ü) prédéterminée et des durées T₁ et T₂ soient réglées.
